# EUROPEAN PATENT APPLICATION

(11) **EP 1 761 066 A1**
(43) Date of publication of application: **07.03.2007**
(21) Application number: 06119685.3
(22) Date of filing: 29.08.2006
(51) Int. Cl.: H04N 7/30, H04N 7/26

(54) **Systems and Methods for Processing Digital Video Data**

(30) Priority: 29.08.2005 US 215571
(71) Applicant: Honeywell International Inc., Morristown, New Jersey 07962 (US)
(72) Inventor: Ramos, Jeremy, Clearwater, FL 33764-7290 (US); Walfuch, Jason, St. Petersburg, FL 33702 (US); Butera, Christopher J., Odessa, FL 33556 (US)
(74) Representative: Haley, Stephen

(57) **Abstract**

Methods and systems for processing digital video data are provided. In one embodiment, a method comprises capturing one or more video images and generating serial digital video signals of the one or more video images. The method further comprises filtering one or more of color, sound, and control symbols from the serial digital video signals. The method further comprises storing the serial digital video signals as a memory mapped image in one or more memories; performing one or more image enhancement operations on the memory mapped image, including one or more of digital filtering, edge detection, image cropping and image magnification; and generating second serial digital video signals of the transmitted memory mapped images by one or more of, restoring control symbols, inserting blank color data samples, inserting blank sound data samples.

## Description

This application is also related to the following co-pending United States patent application filed on July 23, 2004, which is hereby incorporated herein by reference:
United States patent application serial number 10/897,888 (attorney docket number H0003944-1628 entitled "3944") and which is referred to here as the '3944 Application.

This application is also related to the following co-pending United States patent application filed on even date herewith, which is hereby incorporated herein by reference:

United States patent application serial number / (attorney docket number H0008827-1628 entitled "Systems and Methods for Semi-Permanent, Non-Precision In-space Assembly of Space Structures, Modules and Spacecraft") and which is referred to here as the '8827 Application.

The present invention generally relates to video imagery and more specifically to digital video processing.

Digitally processing streaming video data, such as television data, currently requires very powerful computing equipment to perform various calculations for each frame of video. Typically, reducing the processing time for video data requires corresponding increases in the processing power of the computing equipment. However, in applications such a space-based systems, there are financial, system resource, and other practical constraints that limit the complexity, memory, and computing power of the available computing equipment. For the reasons stated above and for other reasons stated below which will become apparent to those skilled in the art upon reading and understanding the specification, there is a need in the art for improved systems and methods that enable faster digital processing of video data without the need for increasing the processing power of the computing equipment.

The Embodiments of the present invention provide methods and systems for processing digital video data and will be understood by reading and studying the following specification.

In one embodiment, a digital video processing system is provided. The system comprises one or more optical sensor modules adapted to generate serial digital video signals of captured images and a reconfigurable computer coupled to the one or more optical sensor modules configured to process the serial digital video signal. The reconfigurable computer is further configured to implement a first digital filter adapted to remove from the serial digital video signal data pertaining to one or more of color, sound, and control symbols, and the reconfigurable computer is further configured to implement one or more memories adapted to store the serial digital video signal filtered by the first digital filter, as a memory-mapped image.

In another embodiment, a method for processing of images captured by a satellite in orbit is provided. The method comprises capturing one or more video images with an orbiting optical sensor; generating serial digital video signals of the one or more video images in orbit; filtering one or more of color, sound, and control symbols from the serial digital video signals in orbit; storing the filtered serial digital video signals as a memory mapped image in one or more memories in orbit; and transmitting the memory mapped images to a ground station.

In yet another embodiment, a method for processing video images is provided. The method comprises capturing one or more video images; generating serial digital video signals of the one or more video images; filtering one or more of color, sound, and control symbols from the serial digital video signals; storing the serial digital video signals as one or more memory mapped images in one or more memories; performing one or more image processing operations on the memory mapped images, including one or more of digital filtering, edge detection, image cropping and image magnification; and generating second serial digital video signals of the transmitted memory mapped images by one or more of, restoring control symbols, inserting blank color data samples, inserting blank sound data samples.

The present invention can be more easily understood and further advantages and uses thereof more readily apparent, when considered in view of the description of the preferred embodiments and the following figures in which:
Figures I A and 1B are block diagrams of a reconfigurable computer based digital video processing system of one embodiment of the present invention;
Figures 2A and 2B are diagrams illustrating a reconfigurable computer based satellite imaging system of one embodiment of the present invention;
Figure 3A and 3B are diagrams illustrating a reconfigurable computer based digital video processing system for an automated space module docking system of one embodiment of the present invention;
Figures 4A, 4B and 4C are diagrams illustrating a reconfigurable computer based digital video surveillance system of one embodiment of the present invention;
Figure 5 is a flow diagram illustrating a method of one embodiment of the present invention.

In accordance with common practice, the various described features are not drawn to scale but are drawn to emphasize features relevant to the present invention. Reference characters denote like elements throughout figures and text.

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present invention address the problem of providing faster digital processing of video data without the need for increasing available computing resources by filtering out unnecessary data samples from the video data stream and storing video image frames as memory mapped images prior to performing digital image processing operations on the data. Not only does the reduced data set reduce memory requirements for storing video data, and bandwidth requirements for transmitting video data, efficiency is gained because the video data retrieved from memory and processed by the computing resources contains only the information needed to perform the desired image processing operation.

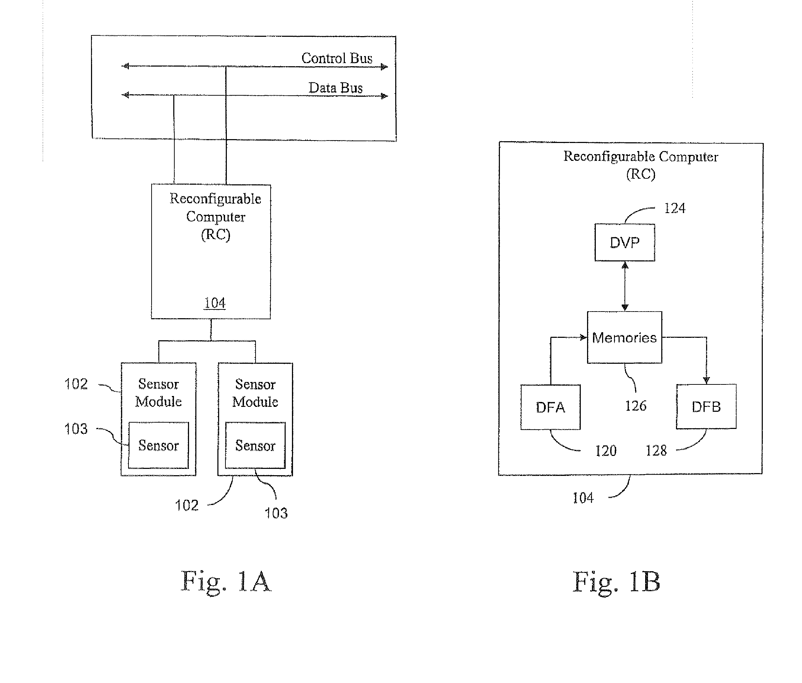

Figure 1A is a bock diagram illustrating an embodiment of a computer-based video processing system 100. System 100 includes one or more image sensor modules 102. Each image sensor module 102 is a source of raw video data that is to be processed by system 100. Each sensor module 102 comprises one or more image sensors 103 that generate video image data. Image sensor module 102 includes appropriate support functionality (not shown) that, for example, performs analog-to-digital conversion and drives the input/output interfaces necessary to supply the sensor data to other portions of system 100. For example, in one embodiment, each sensor module 102 includes an array of optical sensors such as an array of charge coupled device (CCD) sensors or complimentary metal oxide system (CMOS) sensors. In another embodiment, an array of infrared sensors is used. The array of optical sensors, in such an embodiment, generates pixel image data that is used for subsequent image processing in the system 100. In other embodiments, other types of sensors are used. For many applications, sensors 103, by themselves, generate and output more data than is necessary to accomplish a specific task. For example, sensor 103 may serve in a security camera application to observe and detect movement in a hallway, where black and white video imagery is all that is required. However, sensor 103 may output raw video data as a standard video signal, such as, but not limited to a Serial Digital Interface (SDI) standard signal, which contains color, sound, control symbols, or other data in addition to the luminance data required to create the black and white video image. The existence of this extra data is not only unnecessary for the particular application, but serves to increase the bandwidth required to transmit the data in real-time, increase the memory required to store the data, and increase the time required for a computer to analyze and process the data,

Sensor data output by the sensor modules 102 is processed by one or more reconfigurable computers (RC) 104, included in system 100, configured for digital video processing. As shown in Figure 1B, in one embodiment an RC 104 is configured to implement digital video processor (DVP) 124 to perform one or more image processing operations such as, but not limited to, Rice compression or edge detection. In one embodiment RC 104 is a reconfigurable computer described in the '3944 Application. Further details pertaining to reconfigurable computers are provided in the '3944 Application herein incorporated by reference.

In order increase the rate at which DVP 124 can processes video frames, RC 104 is further configured to filter out unnecessary data from the data signal output from sensor module 102. As illustrated in Figure 1B, RC 104 is further configured to implement a first digital filter (DFA) 120. DFA 120 employees a "lossy" compression filter algorithm that removes from the video signal data pertaining to one or more of, but not limited to, color, sound and control symbols. In one embodiment, where only luminance video data is relevant, the removal of color, sound and control symbol information from the signal reduces the volume of data that must be processed by RC 104 in order to accomplish the desired image processing operation.

While DFA 120 reduces the volume of data samples which must be processed by DVP 124, the removal of control symbols from the data also eliminates structure information required to re-assemble the numerous luminance data samples into a meaningfully accurate representation of the captured image. Accordingly, RC 104 is further configured to store the data in memory in such a way as to preserve the image structure. In one embodiment, memories 126 are memory mapped so that each memory address correlates to a specific pixel position in the image. For example, in one embodiment, video image data for a frame of video comprises lines 1 through L with each line comprising N pixels. In one embodiment, the luminance samples for the N pixels of the first line of the video image are stored in a first row of memory addresses in memories 126. Likewise, luminance samples for the N pixels of the line 2 through L of the video image are stored in rows 2 through L of memory addresses in memories 126. In this way, each pixel in the video image frame is mapped to a specific memory address in memories 126, thus preserving the video image without the need for preserving control symbols from the serial digital video signal. The advantage of memory mapped image frames is that only the data of interest need be preserved in applications where memory resources are limited. When DVP 124 performs the one or more image processing operations on the image frame, efficiency is gained because the data retrieved by DVP 124 from memories 126 contains only the information needed by DVP 124 to perform the operation. Efficiency is also gained when saving the processed image back to memories 126 as a memory mapped image because the data saved by DVP 124 also contains only the data of interest.

In one embodiment, in order to communicate the processed image in memories 126 to one or more external devices, RC 104 is further configured to implement a second digital filter (DFB) 128. DFB 128 employs a filter algorithm that inputs the digital images stored in memories 126 and outputs the images as a serial digital video signal by restoring control symbols and inserting blank (e.g. zero value) data samples for one or more of, but not limited to, color and sound. In one embodiment, DFB 128 converts the images stored in memory mapped memories 126 and outputs an SDI standard signal.

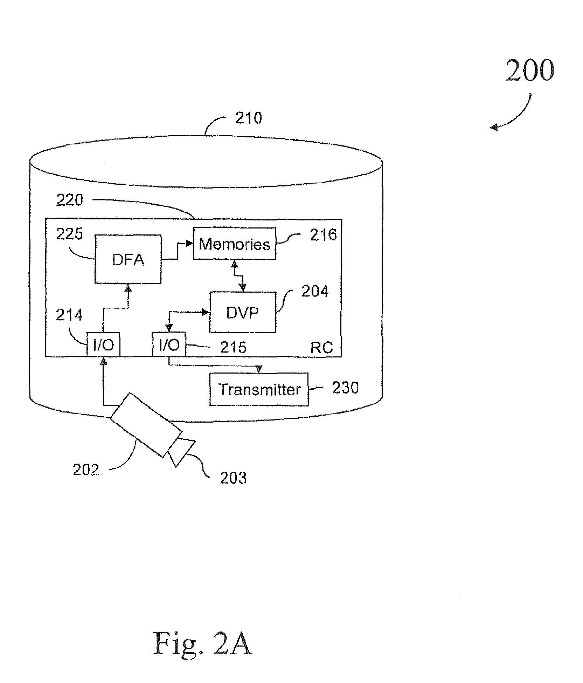

Figure 2A illustrates one embodiment of the present invention in use in an orbiting spacecraft 210. By reducing the computing power and memory resources required to processes digital video images, embodiments of the present invention allow digital video images captured by orbiting spacecraft 210 to be processed in space, onboard spacecraft with limited computing resources. By processing the images in space, only image data of interest need be transmitted to earth, thus reducing both transmission bandwidth requirements and the need for earth-based processing of the images. Additionally, the reduced computing time required for performing image processing operations on each frame of video data means that processed image frames can be transmitted to earth at nearly the same rate as they are captured.

In one embodiment, spacecraft 210 is a satellite, such as a weather satellite used to observe weather patterns occurring on earth or other body. Spacecraft 210 includes an optical sensor module 202 having a optical sensor 203, adapted to capture video imagery of the earth. In one embodiment, optical sensor 203 outputs captured video imagery as an analog signal, such as, but not limited to an NTSC standard analog signal or a PAL standard analog signal. In one embodiment, optical sensor module 202 converts the analog signal into a serial digital video signal, such as, but not limited to an SDI standard signal. In another embodiment, optical sensor 203 includes an array of optical sensors such as, but not limited to, an array of charge coupled device (CCD) sensors, or an array of complimentary metal oxide system (CMOS) sensors, and outputs captured video imagery as a serial digital video signal, such as, but not limited to an SDI standard signal.

In one embodiment, spacecraft 210 further comprises RC 220 configured to perform digital video processing. In one embodiment, RC 220 comprises a reconfigurable computer as described in the '3944 Application herein incorporated by reference. In one embodiment, RC 220 is configured to input the serial digital video signal from optical sensor module 202 through input/output (I/O) interface 214 and store the signal as digital data samples in one or more memories 216. In one embodiment, RC 220 is configured to implement a digital filter, DFA 225. DFA 225 employees a "lossy" compression filter algorithm that removes from the serial digital video signal data pertaining to one or more of, but not limited to, color, sound and control symbols, before the signal data is stored in memories 216. Further, memories 216 are memory mapped so that as DFA 225 stores the filtered signal data into memories 216, the structure of the video image is maintained. For example, in one embodiment, where the serial digital video signal is an SDI standard signal, DFA 225 removes Timing Reference Signal (TRS) data, chrominance (Cb and Cr) data samples, Audio Engineering Society/European Broadcasting Union (AES/EBU) audio channel data samples, and any other information stored in the blanking interval of the SDI video stream. The remaining data samples, comprising only a stream of luminance samples (Y) for each pixel of the captured video image, are stored in Memories 216.

In one embodiment, RC 220 is further configured to implement digital video processor (DVP) 204 to perform digital enhancements to video image frames stored in memories 216. DVP 204 performs one or more image enhancement operations such as, but not limited to, digital filtering, edge detection, image cropping, image magnification, or other image enhancement, and stores the processed images in memories 216. By processing the image in space, individuals on earth can download only the features of the image they are interested in.

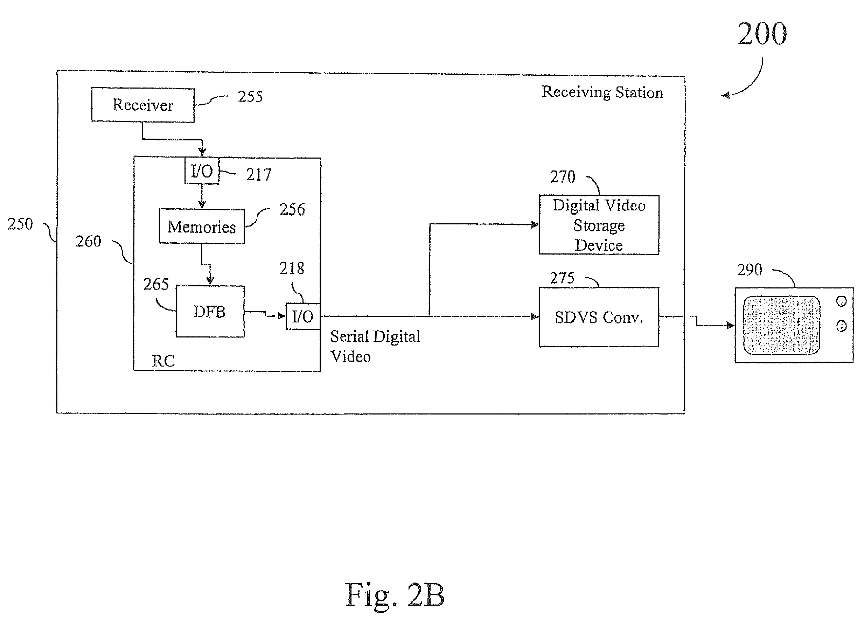

In one embodiment spacecraft 210 further comprises a transmitter 230 that is adapted to wirelessly transmit a data stream containing the images captured by optical sensor module 202 and processed by RC 220. After enhancing the images, DVP 204 outputs the images to transmitter 230 via I/O port 215. In one embodiment, the data stream is wirelessly received by receiving station 250, illustrated in Figure 2B. In one embodiment, receiving station 250 comprises a receiver 255 and a reconfigurable computer (RC) 260. RC 260 inputs the data stream received by receiver 255 via I/O port 217 and stores the data stream as digital data samples in one or more memories 256. As described pertaining to memories 216, memories 256 are memory mapped so that each memory address contains a luminance sample that correlates to a specific pixel in the image. In one embodiment, RC 260 is configured to implement a digital filter, DFI3 265. DFB 265 employees a filter algorithm that inputs digital images stored in memory mapped memories 256 and outputs the images as a serial digital video signal by restoring control symbols and blank data samples for one or more of, but not limited to, color and sound. In one embodiment, DFB 265 converts the images stored in memory mapped memories 256 and outputs an SDI standard signal by reconstructing TRS data, and inserting zero value data samples for the Cb and Cr data samples removed by DFA 225, and zero value data samples in the blanking interval of the SDI video stream. The serial digital video signal output from DFB 265 represents a digitally enhanced version of the raw video images captured by optical sensor 203, which then may be utilized on earth in any number of ways. In one embodiment, the digitally enhanced video images are stored on a digital video storage device 270 (such as a magnetic tape or magnetic or optical disk) for later viewing or processing. In one embodiment, RC 260 further comprises a serial digital video signal converter (SDVS Conv.) 275 adapted to convert serial digital video signals into one or more standard analog video signals, such as, but not limited to NTSC signals and PAL signals for use with an analog video monitor such as monitor 290.

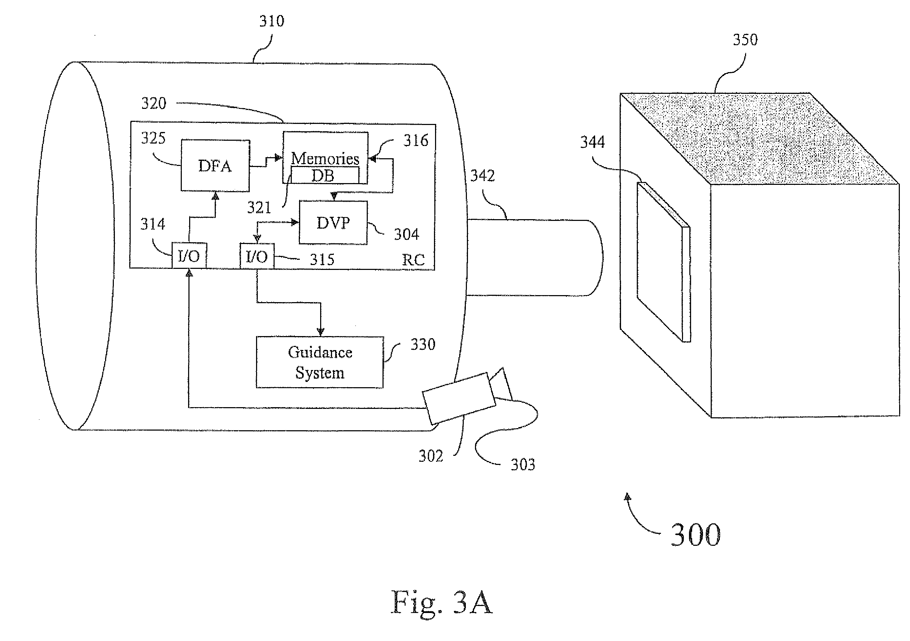

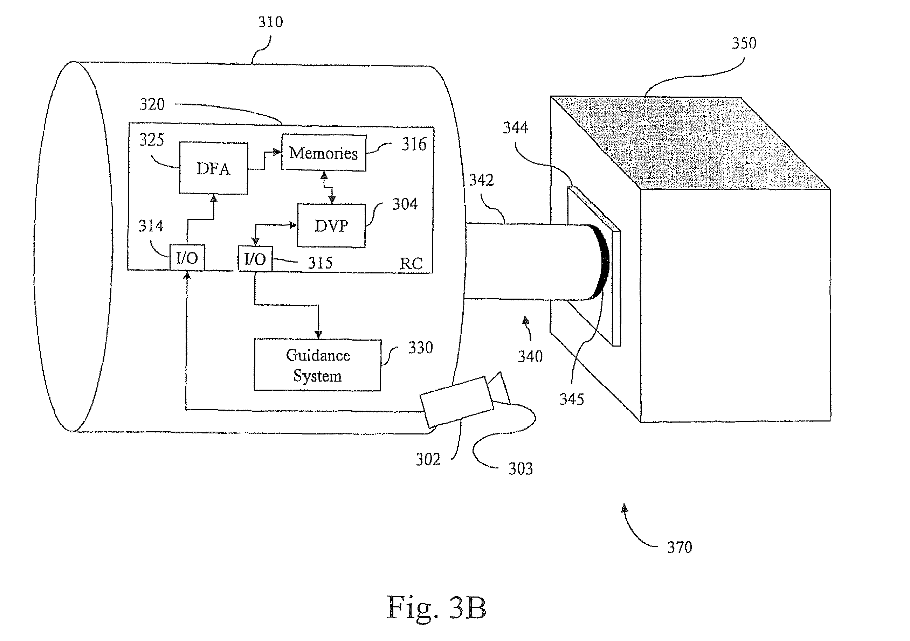

Figure 3A and 3B illustrate one embodiment 300 of an automated space module docking system of one embodiment of the present invention. A first spacecraft module 310 and a second spacecraft module 350 are adapted with a bonding device 340 as described in the '8827 Application herein incorporated by reference. In one embodiment, spacecraft module 310 and spacecraft module 350 (shown separated in Figure 3A) are assembled together into a single spacecraft assembly 370 (shown in Figure 3B), wherein spacecraft modules 31a and 350 are secured together by bonding device 340. In one embodiment, bonding device 340 is comprised of two components, a bonding post 342 and a receiving plate 344, mounted to spacecraft module 310 and spacecraft 350, respectively. In space, spacecraft modules 310 and 354 adjust their relative positions until bonding post 342 is very close to, or in contact with receiving plate 344. Spacecraft modules 310 and 350 are then secured together by a mechanical bond 345 formed as described in the '8827 Application, herein incorporated by reference. First spacecraft module 310 includes an optical sensor module 302, adapted to output a serial digital video signal of video imagery of second spacecraft module 350 captured by optical sensor 303. First spacecraft module 310 further comprises RC 320, configured to processes images captured by optical sensor module 302 to determine the relative positions of spacecraft modules 310 and 350. In one embodiment, RC 320 is configured to input the serial digital video signal from optical sensor module 302 through input/output (I/O) interface 314 and store the signal as digital data samples in one or more memories 316. In one embodiment, RC 320 is configured to implement a digital filter, DFA 325 which removes from the serial digital video signal data pertaining to one or more of, but not limited to, color, sound and control symbols, before the signal data is stored in memories 316. Memories 316 are memory mapped so that as DFA 325 stores the filtered signal data into memories 316, the structure of the video image is maintained. RC 320 is further configured to implement DVP 320, which is adapted to perform one or more image enhancement operations on the video image stored in memories 316 to determine the relative positions of spacecraft module 310 and spacecraft module 350. In one embodiment, RC 320 processes the video image and correlates one or more feature of the captured images of spacecraft module 350 with a database (DB) 321 of images of spacecraft module 350 to determine the relative positions of spacecraft module 310 and spacecraft module 350. In one embodiment, RC 320 outputs one or more relative position signals representing the relative positions of spacecraft module 310 and spacecraft module 350 via I/O port 315. In one embodiment, a guidance system 330 is adapted to input the one or more relative position signals from RC 320 and maneuver spacecraft module 310 based on the relative position signals in order to align bonding post 342 with receiving plate 344. When bonding post 342 and receiving plate 344 are sufficiently close together, spacecraft modules 310 and 350 establish bond 345 as described in the '8827 Application, herein incorporated by reference. As would be appreciated, any number of spacecraft modules can be assembled into a single structure using a plurality of bonds formed in accordance with embodiments of the present invention.

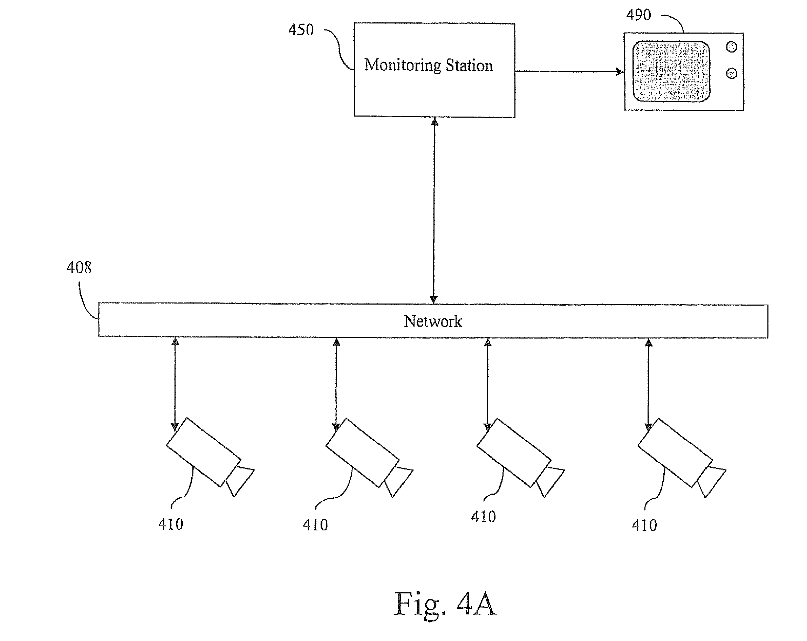

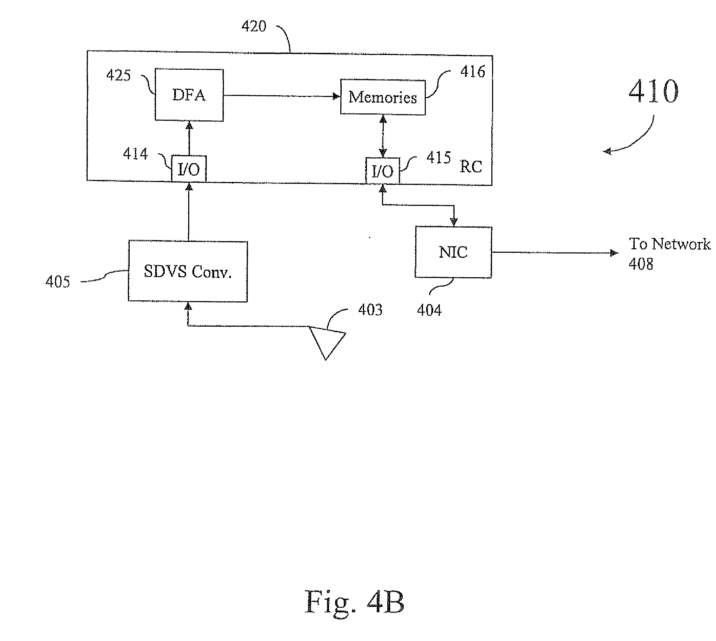

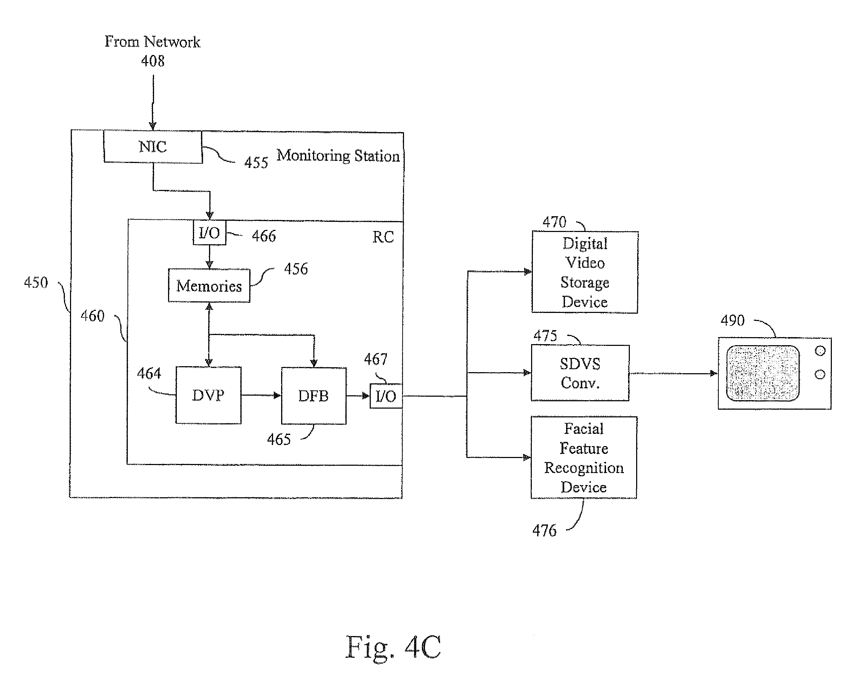

Figure 4A, 4B and 4C illustrate a security surveillance system 400 of one embodiment of the present invention. Security surveillance system 400 comprises a plurality of surveillance stations 410 adapted to communicate digital images with a monitoring station 450 via one or more networks 408.

As illustrated in Figure 4B, each surveillance station 410 includes an optical sensor 403 adapted to capture video imagery of an area under surveillance. In one embodiment, an optical sensor 403 outputs captured video imagery as an analog signal, such as, but not limited to an NTSC standard analog signal or a PAL standard analog signal. In one embodiment, serial video data stream converter (SDVS conv.) 405 converts the analog signal into a serial video data stream such as, but not limited to, an SDI standard signal. In another embodiment, optical sensor 403 includes an array of optical sensors such as, but not limited to, an array of CCD sensors, or an array of CMOS sensors, and directly outputs captured video imagery as a serial video data stream, such as, but not limited to an SDI standard signal. Surveillance station 410 further comprises a RC 420 configured for digital video processing. In one embodiment, RC 420 is configured to input the serial digital video signal from SVDS conv. 405 through I/O interface 414 and store the signal as digital data samples in one or more memories 416. In one embodiment, RC 420 is further configured to implement digital filter DFA 425. DFA 425 removes from the serial video data stream data pertaining to one or more of, but not limited to, color, sound and control symbols, and stores the resulting filtered video data in memories 416. In one embodiment, where the serial video data stream is an SDI standard signal, DFA 425 removes TRS data, Cb and Cr data samples, AES/EBU audio channel data samples, and any other information stored in the blanking interval of the SDI video stream. The remaining data samples, comprising only a stream of luminance samples (Y) for each pixel of the captured video image, are stored in memories 416. Memories 416 are memory mapped as described above so that as DFA 425 stores the filtered video data into memories 416, the structure of the video image is maintained. In one embodiment, RC 420 outputs the filtered video data via I/O port 415 to network interface card (NIC) 404, which adapts filtered video data for transmission over networks 408 and transmits the resulting signal to monitoring station 450 via networks 408. In one embodiment, networks 408 comprises one or more of, an Ethernet network and a TCP/IP network.

In one embodiment, monitoring station 450 comprises a NIC 455 and RC 460. NIC 455 receives the filtered video data signal from network 408 and outputs the data to RC 460 via I/O port 466. RC 460 stores the filtered video data in one or more memories 456. As described pertaining to memories 216, memories 456 are memory mapped so that each memory address contains a luminance sample that correlates to a specific pixel of an image.

In one embodiment, RC 460 is configured to implement a digital filter, DFB 465. DFB 465 employees a filter algorithm that inputs digital images stored in memory mapped memories 456 and outputs the images via I/O 467 as a serial digital video signal by restoring control symbols and blank data samples for one or more of, but not limited to, color and sound. In one embodiment, DFB 465 inputs the images stored in memory mapped memories 456 and outputs an SDI standard signal by reconstructing TRS data, and inserting zero value data samples for the Cb and Cr data samples and in the blanking interval of the SDI video stream. In one embodiment, RC 460 is further configured to implement digital video processor (DVP) 464 to perform digital image enhancement on the video image frame stored in memories 456. DVP 464 performs one or more image enhancement operations such as, but not limited to, edge detection, image cropping, image magnification, or other image enhancement, and stores the processed image in memories 456.

In one embodiment, surveillance system 400 includes serial digital video signal converter (SDVS Conv.) 475 adapted to convert serial video data stream into one or more standard analog video signals, such as, but not limited to NTSC signals and PAL signals for display on an output device 490, such as a video monitor. In one embodiment, surveillance system 400 includes video storage device 470 (such as a magnetic tape or magnetic or optical disk) adapted to store the video images carried for later viewing or processing. In one embodiment, surveillance system 400 includes a facial feature recognition device 476, adapted to correlate facial images of individuals captured by one of the plurality of surveillance stations 410 with a database of facial images of persons of interest such as know, but not limited to, known and suspected criminals, fugitives, or terrorists.

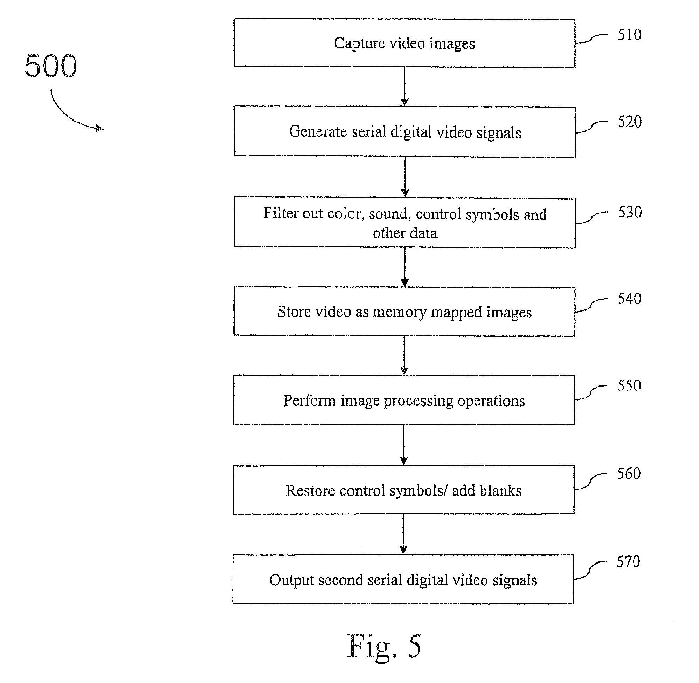

Figure 5 is a flow chart illustrating a method 500 for digital video processing of one embodiment of the present invention. The method first comprises capturing video images (510) and generating serial digital video signals (520) from the images. For many applications, standard serial digital video signals often generate and output more data (e.g. color and sound data samples) than is necessary to accomplish the specific task requiring the video images. To streamline the data down to data samples of interest, the method next comprises filtering out color, sound, control symbols, and other data from the serial digital video signals (530). In one embodiment, after filtering the standard serial digital video signals, only luminance related data remains. With the video data streamlined, less computer resources are wasted on storing, processing and transmitting data samples that are not required to accomplish the desired digital video processing operation on the video images. As previously discussed, the removal of control symbols from the data also eliminates structural information from the data that is useful for re-assembling the data samples into a representation of the captured image. The need for these control symbols is eliminated however by storing video frames in memory as memory mapped images (540). In one embodiment, each memory address correlates to a specific pixel position in the image. In one embodiment, luminance data samples for each frame of video is stored as a memory mapped image. In one embodiment, one or more image processing operations are performed on the video image (550), such as, but not limited to, edge detection, image cropping, image magnification, or other image filtering. With embodiments of the present invention, efficiency is gained in performing these image processing operations because the memory mapped image data contains only the information needed to perform the operation. In order to communicate the processed image to one or more external devices, in one embodiment, the method further comprises restoring control symbols and adding bland data samples (e.g. zero value data samples) for one or more of, but not limited to, color and sound (560) as required in order to output the digitally enhanced video images as a second serial digital video signal (570). In one embodiment, the second serial digital video signal is a standard signal such as, but no limited to, an SDI standard signal. In one embodiment, one or more steps of method 500 are performed by one or more reconfigurable computers such as those described in the '3944 Application herein incorporated by reference.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A digital video processing system, the system comprising:
one or more optical sensor modules 102 adapted to generate serial digital video signals of captured images; and
a reconfigurable computer 104 coupled to the one or more optical sensor modules 102 configured to process the serial digital video signal, wherein the reconfigurable computer 104 is further configured to implement a first digital filter 120 adapted to remove from the serial digital video signal data pertaining to one or more of color, sound, and control symbols, and wherein the reconfigurable computer 104 is further configured to implement one or more memories 126 adapted to store the serial digital video signal filtered by the first digital filter 120, as a memory-mapped image.

2. The system of claim 1, the one or more optical sensor modules 102 further comprising:
an optical sensor 103 adapted to output captured video imagery as an analog signal; and
a serial digital video signal converter 405 adapted to convert the analog signal into a serial digital video signal.

3. The system of claim 2, wherein the analog signal is one of an NTSC standard analog signal and a PAL standard analog signal.

4. The system of claim 2, wherein the serial digital video signal is an SDI standard signal.

5. The system of claim 4, wherein the a first digital filter 120 adapted to remove one or more of TRS data, Cb and Cr data samples, AES/EBU audio channel data samples, and information stored in the blanking interval of the SDI video stream.

6. The system of claim 1, wherein the reconfigurable computer 104 is further configured to implement a second digital filter 124 adapted to perform one or more image enhancement operations including one or more of digital filtering, edge detection, image cropping and image magnification, on the memory mapped image stored in the one or more memories 126.

7. The system of claim 1, wherein the reconfigurable computer 104 is further configured to implement a third digital filter 128 adapted to input one or more memory-mapped images stored in the one or more memories 126 and output the filtered images as a second serial digital video signal.

8. The system of claim 7, wherein the reconfigurable computer 104 is adapted to output an SDI standard signal by reconstructing TRS data, and inserting blank data samples for Cb and Cr data samples.

9. The system of claim 7, further comprising a second serial digital video signal converter adapted to convert the second serial digital video signals into one or more analog video signals.

10. The system of claim 1, wherein the reconfigurable computer 104 is adapted to perform a method for processing video images, the method comprising:
capturing one or more video images 510;
generating serial digital video signals of the one or more video images 520;
filtering one or more of color, sound, and control symbols from the serial digital video signals 530;
storing the serial digital video signals as one or more memory mapped images in one or more memories 540;
performing one or more image processing operations on the memory mapped images, including one or more of digital filtering, edge detection, image cropping and image magnification 550; and
generating second serial digital video signals of the transmitted memory mapped images by one or more of, restoring control symbols, inserting blank color data samples, inserting blank sound data samples 560.
